# EUROPÄISCHE PATENTANMELDUNG

(11) **EP 1 975 608 A2**
(43) Veröffentlichungstag der Anmeldung: **01.10.2008**
(21) Anmeldenummer: 08004443.1
(22) Anmeldetag: 11.03.2008
(51) Int. Cl.: G01N 29/24, G01N 29/28, G01N 29/44, G01N 3/40

(54) **Verfahren zur berührungslosen Ultraschallprüfung des Härtungsgrades von Druckfarben- und Lackschichten**

(30) Priorität: 28.03.2007 DE 102007015366
(71) Anmelder: manroland AG, 63075 Offenbach (DE)
(72) Erfinder: Casagrande, Magdalena-Elena, Dipl.-Phys., 81667 München (DE); Walther, Thomas, Dipl.-Ing., 63067 Offenbach (DE)
(74) Vertreter: Stahl, Dietmar

(57) **Zusammenfassung**

Zur effizienteren und energiesparenden Trocknung von Druckfarben oder Lackschichten in Druckmaschinen soll das Trocknungs-bzw. Härtungsverfahren besser überwacht werden.

Vorgeschlagen wird daher ein Verfahren zur Bestimmung des Härtungs- oder Trocknungsgrades einer oder mehrerer gedruckter Druckfarben- und/oder Lackschicht/en auf einem Substrat, das im Tief-, Flexo- oder Offsetdruckes beschichtet wurde. Der Härtungs- bzw. Trocknungsgrad wird dazu indirekt über die Veränderung der mechanischen und/oder viskoelastischen Eigenschaften der Druckfarben und/oder Lackschichten auf dem Substrat durch den Härtungs- bzw. Trocknungsvorgang bestimmt. Hierfür kommt ein Ultraschall-Messverfahren zur Anwendung.

## Beschreibung

Die Erfindung betrifft ein Verfahren zur Prüfung des Härtungsgrades von in einem der Massendruckverfahren Offset-, Flexo- oder Tiefdruck gedruckten Druckfarben- oder Lackschichten mittels Ultraschall.

Die Härtung von Druckfarben- und Lackschichten kann zunächst durch einen der folgenden Prozesse wie das Verdampfen von Lösungsmitteln, das Wegschlagen von Lösungsmitteln in den Bedruckstoff, durch Oxidation, durch Polymerisation mit Hilfe von UV- oder Elektronenstrahltrocknern oder auch durch Kombinationen der aufgeführten Trocknungsmechanismen erfolgen.

Es gibt eine Vielzahl von Faktoren, die eine Kontrolle der Durchhärtung von Druck- und Lackschichten sinnvoll erscheinen lassen. Eine ausreichende Trocknung und Härtung der verdruckten Druckfarben bzw. Lacke ist Voraussetzung für qualitativ hochwertige Drucke. Im Bereich des Förderwegs von Bogen durch eine Druckmaschine können Berührungen der frisch bedruckten oder lackierten Bogenoberfläche mit Bogenleitelementen zu Beschädigungen führen, was Makulatur (Ausschuss) in den Druckprodukten bedingt. Die im Auslagestapel einer Bogendruckmaschine oder in Wickelrollen einer Rollendruckmaschine gespeicherten Druckprodukte müssen hinsichtlich aufgedruckter Druckfarben bzw. Lacke ausreichend trocken sein, das sie sonst beim Abstapeln bzw. Aufrollen verschmieren und auch verblocken (miteinander verkleben) würden. Gerade letzteres würde eine Weiterverarbeitung der Druckprodukte erschweren bzw. ganz unmöglich machen.

An die Einstellung der unterschiedlich aufgebauten Trocknereinrichtungen sind während des Druckprozesses hohe Anforderungen zu stellen. Bereits beim Einrichten der Druckmaschine hat der Bediener Einstellungen an den Trocknereinrichtungen vorzunehmen, um nach möglichst kurzer Zeit und Anzahl von Makulaturbogen (Vorlaufmakulatur) die erforderliche Qualität produzieren zu können. Eine zu hoch eingestellte Trocknerleistung bedingt nicht nur einen hohen Energieverbrauch der Druckmaschine und darüber hinaus eine hohe Abwärmeleistung, die die Temperatur des Drucksaales erhöht bzw. durch Klimatisierung des Drucksaales zu beseitigen wäre, sondern auch der Druckprozess selbst wird negativ beeinflusst. Bekanntlich ändert sich die Zügigkeit und Viskosität von Druckfarbe bzw. Lacke, so dass eine hohe Maschinenerwärmung nebst der Erwärmung von Farbe und Dosiereinrichtung unter Umständen wieder Makulatur verursachende Nachregelungen erforderlich machen. Zu niedrige Einstellung der Trocknerwirkung bzw. Trocknerleistung sind ebenfalls zu vermeiden, da sonst die geschilderte Gefahr des Verschmierens frisch bedruckter Bogen während des Bogentransportes bzw. in der Auslage besteht.

Durch eine Trocknersteuerung ist neben einer Makulaturreduzierung auch eine erhebliche Energieeinsparung möglich. Da die Trocknereinrichtungen nur noch mit der Leistung gefahren werden, welche entsprechend den aktuellen Gegebenheiten erforderlich sind, wird die Stromaufnahme der Einrichtungen auf den jeweilig erforderlichen Wert reduziert. Da die Trocknereinrichtungen auch Abwärme produzieren, ergibt sich auch eine verringerte Aufheizung von Maschinenelementen bzw. der gesamten Maschine. Dadurch wird auch die Lebensdauer der Maschine bzw. von Maschinenkomponenten erhöht. Letztlich vermeidet eine reduzierte Leistung der Trockner auch eine Erhöhung der Drucksaaltemperatur. Auch bei klimatisiertem Drucksaal ergibt sich eine Energieeinsparung, da weniger Abwärme von den Trocknern produziert wird.
Besondere Probleme ergeben sich beim Druck mit strahlenhärtenden Druckfarben und Lacken, da diese in die Druckmaschinen eine Härtungskontrolle erforderlich machen. Der Druck mit strahlenhärtenden Offsetdruckfarben hat in der Druckindustrie eine weite Verbreitung gefunden. Vorteile des Drucks mit den strahlenhärtenden Druckfarben liegen in der schnellen, spontanen Vernetzung nach der Bestrahlung mit einer UV-Strahlungsquelle, der Lösungsmittelfreiheit der Druckfarben und der guten Bedruckbarkeit von nicht saugenden Substraten (Folien).

Konventionelle Druckfarben sind dagegen entweder ölbasierend oder lösemittelhaltig. Ölbasierende Druckfarben trocknen durch die Oxidation der Bindemittel auf Ölbasis oder trocknen durch Verdampfen der in der Druckfarbe befindlichen leichtflüchtigen Öle (Heat-Set-Verfahren). Strahlenhärtende Druckfarben und Lacke härten dagegen durch einen fotochemischen Prozess, der auch als Vernetzung bezeichnet wird. Der flüssige oder unvernetzte Druckfarbenfilm wird durch die Polymerisation unter Einwirkung von UV-Licht in einen festen Zustand übergeführt.

Es sind Fehler bekannt, wo unvernetzte Druckfarbenbestandteile durch Abklatsch im Auslegerstapel einer Bogendruckmaschine oder in einer Rolle nach dem Druck auf die Rückseite des darüber befindlichen Substrats übertragen wurden. Auch können Druckfarbenbestandteile durch den Bedruckstoff hindurch migrieren. Eine Migration von Druckfarbenbestandteilen oder ein Abklatsch von Druckfarben kann bei Verpackung zu einer sensorischen Beeinflussung des Füllgutes führen. Bei Überschreiten von spezifischen Migrationlimits kann im Falle einer Verpackung für Lebensmittel eine gesundheitliche Beeinträchtigung des Konsumenten nicht ausgeschlossen werden. Bei Überschreiten der spezifischen Migrationlimits müssen Verpackungen auf jeden Fall aus dem Verkehr gezogen werden, was neben dem finanziellen Folgen meist auch ein Verlust der Reputation des Markenherstellers im Markt zur Folge hat. Die Wahrung der gesundheitlichen Unbedenklichkeit ist vorrangig. Laut § 30 LMBG ist es verboten Bedarfsgegenstände so herzustellen, dass sie bei bestimmungsgemäßen Gebrauch geeignet sind, die Gesundheit durch ihre stoffliche Zusammensetzung, insbesondere durch toxikologisch wirksame Stoffe oder Verunreinigungen zu schädigen. Zudem gilt nach deutschem und europäischem Recht und ebenso in den USA das No-Migration-Prinzip, d.h. ein Übergang von Stoffen auf das verpackte Lebensmittel ist zu vermeiden. Deswegen ist es besonders wichtig auf jeden Fall die Vernetzung der strahlenhärtenden Druckfarbe auf dem Bedruckstoff sicher zu stellen.

Auch haben nicht ausgehärtete strahlenhärtende Druckfarben und Lacke Auswirkungen auf die Sicherheit des Bedienpersonals. Sind strahlenhärtende Druckfarben- oder Lackschichten auf dem Bedruckstoff nicht ausreichend durchgehärtet und der Maschinenbediener zieht, zum Beispiel zur Kontrolle der Druckqualität, Probeexemplare, so können migrationsfähige Bestandteile der strahlenhärtenden Druckfarben über die Haut aufgenommen werden. Neben den gesundheitlichen Gefährdungen können auch Reizungen und allergische Reaktionen der Haut entstehen. Dem Druckbetrieben entstehen durch nicht ausgehärtete Lacke und Druckfarben zusätzliche Entsorgungskosten, da Druckbögen mit unvernetzten Druckfarben- oder Lackbestandteilen in der Regel als Sonderabfall behandeln werden. Dies erfordert einen logistischen Mehraufwand und erzeugt in der Regel Mehrkosten für die Entsorgung.

Es spricht also viel dafür, die Aushärtung bzw. Trocknung von Druckfarben- und Lackschichten auf dem Bedruckstoff zu messen, Messgrößen zu bilden und diese direkt oder über Bedienereingabe zur Steuerung der Trockner zu nutzen. Zusätzlich können aus diesen Messwerte Qualitätsprotokolle abgeleitet werden, die für den Anwender Nachweise darstellen, dass die Druckfarbe oder der Lack ausreichend ausgehärtet sind. Dies wird gerade auf dem Feld der strahlenhärtenden Druckfarben und Lacke aus Erwägungen der Produktsicherheit oftmals gefordert.

Die Möglichkeit einer Bewertung der Härtung bzw. Trocknung von Druckfarben- oder Lackschichten wurde vielfach diskutiert. In der EP 1 142 711 B1 wird vorgeschlagen, eine Steuerung für eine Trocknereinrichtung vorzusehen, der mindestens ein Signal einer den Druckprozess charakterisierenden Größe zugeführt wird und dass infolgedessen durch die Steuerung Signale generiert werden, durch welche die Betriebsweise der Trocknereinrichtung in vorgesehener Weise verändert wird. Es wird auch vorgeschlagen die Steuerung der Trocknervorrichtung anhand von am Bedruckstoff gemessenen Messwerten vorzunehmen. Als Messgrößen sind Lack- bzw. Farbschichtdicke oder Glanz des Lackauftrags angeführt.

Die DE 197 37 785 A1 schlägt vor den Trocknungsgrad einer Lackschicht durch das Messen der Intensität eines Mikrowellensignals, das in einer Wechselwirkung mit dem lackierten Bedruckstoff in Wechselwirkung steht zu bestimmen. Die aus dem Messsignal gebildete Zustandsgröße kann dann als Regelgröße für die Trocknersteuerung herangezogen werden. Das Verfahren eignet sich aber nur für den Einsatz von Beschichtungsmedien, die in einem hohen Maße die Mikrowellenenergie absorbieren, wie zum Beispiel eine Dispersionslack, der im wesentlichen Wasser als Lösemittel aufweist. Die Prüfung der Polymerisation von gehärteten Druckfarben- und Lackschichten wurde in dem Patent nicht erwähnt.

Die DE 24 58 935 A1 offenbart ein Mess- und Regelverfahren der Geschwindigkeit von Druck- und Beschichtungsmaschinen, bei dem kontinuierlich auf der Papierbahn die den benutzten Lösemitteln entsprechenden Wellenlängen analysiert werden, wobei die nach dem Trocknen gemessenen Durchschnittswerte mit den voreingestellten Maximalwerten vergleicht. Die Messeinrichtung besteht aus einem Analysatorkopf mit kontinuierlicher Ausstrahlung, einem Empfänger zur Aufnahme der Strahlung, die das zu analysierende Produkt reflektiert oder dasselbe durchfiltert. Nachteilig ist hierbei, dass von vornherein die Lösemittelzusammensetzung bekannt sein muss. Dies ist bei Druckverfahren, die mit einfachen Lösemittelzusammensetzungen arbeiten relativ einfach, die Komplexität steigt bei modernen Druckfarben mit einer Vielzahl von Lösemittel an. Im Regelfall gibt der Lieferant die Zusammensetzung der Druckfarbe nur in groben Bestandteilen bekannt. Außerdem versagt dieses Verfahren bei Druckverfahren, die keine Lösemittel emittieren. Dies sind unter anderem die strahlenhärtenden Druckverfahren und die oxidativ oder wegschlagend trocknenden Druckverfahren. Das Messverfahren ist nicht universell anwendbar. Auch ist eine Anwendung bei schnell laufenden Druckmaschinen bekannt, da die Analyse doch zeitintensiv und komplex ist.

Im Labor werden Infrarotspektroskopie oder Raman-Spektroskopie zur Beurteilung der Polymerisation eingesetzt. Diese Methoden sind wegen ihrer Komplexität und Probenvorbereitung wenig für den Einsatz in dem rauen Maschinenumfeld einer Druckerei geeignet. Daher wurden auch Überlegungen angestellt, den Grad der Polymerisation aus der Veränderung von Physikalischen-mechanischen Eigenschaften der Druckfarben- und Lackschicht abzuleiten. Eine Möglichkeit ist die Bestimmung des Gleitreibungskoeffizienten der Oberfläche, der sich mit zunehmenden Polymerisationsgrad verändert. Der Nachteil dieser Methode ist, dass sie nur auf der Oberfläche wirken und die Tiefenhärtung nur annähernd bestimmt werden kann. Außerdem ist die Gleitreibungsmessung ein berührendes Messverfahren, das zu Beschädigungen auf der Druckfarben- bzw. Lackoberfläche führen können.

Ultraschallmessungen sind in der Druckindustrie als Messmittel bekannt. Testmethoden mit Ultraschall haben den Vorteil, dass diese Techniken weder invasiv noch destruktiv wirken, um die Eigenschaften eines Materials zu bestimmen.

Ein bekannter Ansatz die Festigkeit von Papierbahnen zu prüfen, ist die Messung der Ausbreitungsgeschwindigkeit und -intensität von Schallwellen in der Bahn. In der DE 30 45 581 A1 wird ein solches Verfahren und zur zerstörungsfreien Untersuchungen von Papier bei der Herstellung in einer fortlaufenden, sich schnell bewegenden Bahn beschrieben. Bei diesem Verfahren wird ausgenutzt, dass viele Festigkeitsparameter von Papier in einer Beziehung zu einem Elastizitätsmodul stehen. Letzteres kann mit der Geschwindigkeit von Schallwellen korreliert werden, die sich durch die Papierbahn fortpflanzen. Ein sendender Schallgeber bzw. Wandler sendet ein mechanisches Signal zu dem Papier, und ein Empfänger empfängt das Ultraschallsignal vom Papier. Durch die Kenntnis der Zeit, die Ultraschallwellen zur Fortpflanzung durch das Papier benötigen, und der Entfernung die diese Schallwellen zurücklegen, kann die Geschwindigkeit der Ultraschallwellen berechnet werden. Die Wandler sind gemäß dieser Erfindung in Rädern angeordnet, die sich im physikalischen Kontakt mit der Papierbahn befinden. Diese Berührung und die hohen Anforderungen an die Synchronisation der Räder mit den Wandlern macht die Erfindung nicht sehr praktikabel. Eine solche Messung auf bedruckten Papierbahnen erscheint durch die Berührung sehr schwierig.

Wünschenswert wäre daher eine Messung, die eine nicht berührende Einkoppelung von Schallwellen erfolgt. Die DE 103 18 104 A1 schlägt als berührungslose Messung der Lappigkeit einer Banknote vor, diese mit Schallwellen zu bestrahlen, die von dem Blattgut ausgehende Schallwellen zu erfassen, wobei transmittierte und reflektierte Schallwellen erfasst werden und daraus Werte für die Lappigkeit des Blattgutes abgeleitet werden, die unabhängig von dem Verschmutzungsgrad der Banknote sind. Der Nachteil der gefundenen Lösung besteht unter anderem darin, dass die Schallempfänger an beiden Seiten des Papiers angeordnet sind. Außerdem werden nur transmittierte oder reflektierte Schallwellen bewertet, die Fortpflanzung der Schallwellen an der Oberfläche wird nicht berücksichtigt.

Ultraschall wird in der Druckindustrie auch zur Messung von Farbschichtdicken auf Walzen und Bedruckstoff genutzt. Die DE 43 18 445 B4 beschreibt ein Verfahren, das die Schichtdicke einer Farbe aufgrund der Differenzlaufzeiten bestimmt.

Aufgabe der Erfindung ist es daher, die Aushärtung bzw. Trocknung von in einem Druckprozess auf Papier-, Folien-, oder Kartonbedruckstoffen aufgebrachten Lack- oder Druckfarbenschichten zu bestimmen.

Diese Aufgabe wird gelöst durch die Merkmale des Anspruchs 1.

Sinnvolle Weiterbildungen ergeben sich aus den Unteransprüchen.

Ultraschall kann durch Wandler, zum Beispiel piezoelektrische oder magnetoresistive Wandler, in das Material eingebracht werden. Ultraschall kann aber auch durch einen Laserimpuls oder durch ein Plasma im Material erzeugt werden.

Durch Laser induzierte Schallwellen haben viele Vorteile. Sie erfordern keinen Kontakt zu dem zu testenden Material, erlauben eine schnelle Inspektion und sie sind nichtdestruktiv, wenn die Lichtenergie ausreichend klein gewählt wird. Laserinduzierter Ultraschall kann sehr gut in industriellen Umgebungen, wie einer Druckmaschine erzeugt werden. Die Ultraschallerzeugung ist dann auch nicht vom Kontakt zwischen Material und dem Signalgeber abhängig, wie dies bei zum Beispiel bei Piezowandlern der Fall ist. Der Fokus des Laserstrahls kann sehr klein gewählt werden, so dass gezielte Messungen an definierten Orten möglich sind. Laserinduzierte Ultraschallwellen haben aber auch Nachteile gegenüber der klassischen Einkoppelung über Wandler, da sie teuerer sind und teilweise eine geringere Empfindlichkeit aufweisen.

Der Mechanismus der Ultraschallgenerierung in einem Feststoff lässt sich wie folgend beschreiben. Ein gepulster Laserstrahl wird auf das zu testende Material geleitet und von diesem teilweise absorbiert. Die Lichtenergie, die auf das Material geleitet wird, wird in Wärmenergie umgewandelt, wodurch lokal eine sehr schnelle thermische Expansion des Materials stattfindet. Dies führt zur Erzeugung von Ultraschall in dem Medium. Wenn die Lichtenergie ausreichend klein gewählt wird, schmilzt oder ablatiert das Material nicht. Wenn die Lichtenergie hoch ist und das Material schmilzt und dies zu einer Plasmaerzeugung führt, wird wiederum Ultraschall generiert, aber in diesem Fall durch einen Momententransfer beim Ablösen des Materials. Dieser ablative Prozess ist innerhalb eines Druckbildes nicht akzeptabel, kann aber eventuell in Randbereichen des Druckbogens toleriert werden, zum Beispiel im Bereich des Kontrollstreifens, der später weggeworfen wird.

Die Härtung und Trocknung eines Druckfarben- und Lackfilms kann durch Ultraschall beurteilt werden. Druckfarbe und/oder der Lack erfahren bei der Härtung bzw. Trocknung eine deutliche Viskositätsänderung. Im Fall eines strahlenhärtenden Druckfarben- oder Lackfilms liegen diese direkt nach der Bestrahlung mittels UV-Licht oder Elektronenstrahlen gehärtet vor. Zwischen den Materialeigenschaften und den akustischen Parametern besteht ein enger Zusammenhang. Wenn Ultraschallwellen in eine Druckfarben oder Lackschicht induziert werden, werden längs- und transversal verlaufende Schallwellen durch die Struktur und durch den molekularen Relaxationsprozess (Relaxionsprozess) beeinflusst. Ultraschallmethoden sind daher gut geeignet mechanische Moduli (Moduln) zu bestimmen. In inhomogenen Druckfarbe- und Lackschichten können morphologische Informationen durch Schallstreuung und Reflektion bestimmt werden. Durch diese Methode kann die Filmbildung von Druckfarben- und Lackschichten über die Änderung der mechanischen Eigenschaften des Druckfarben und Lackfilms beobachtet werden. Dabei werden die Echos der längs- und transversal verlaufenden Schallwellen beobachtet und in einer Analysesoftware analysiert. Bei einer derartigen Signalanalyse können bekannte Techniken, wie Fouriertransformationen und Time-slot-Techniken zum Einsatz kommen.

Messungen der mechanischen Moduli (Moduln) der Druckfarben- und Lackschichten erfolgen in der Regel bei sehr hohen Frequenzen vom MHz- bis zum GHz-Bereich. Aber auch die mechanischen Eigenschaften im Tieffrequenzbereich können von Interesse sein. Es können auch Impulse generiert werden, die nicht nur eine Frequenz enthalten. Durch das Nutzen eines breiten, kontinuierlichen Frequenzspektrums kann der Härtungszustand genau definiert werden, denn je nach Härtungszustand werden verschiedene Frequenzanteile unterschiedlich übertragen. Nach der Messung lässt sich das Spektrum der durch eine Fouriertransformation analysieren. Daraus lassen sich Frequenz-Zeit-Kurven oder Frequenz-Zeit-Flächen ableiten, die eine Interpretation der spektralen Eigenschaften eines Druckfarben- oder Lackfilms als eine Funktion der Zeit darstellen,

Es ist möglich die Messung zu verbessern, indem die Probe auf ein Material, wie z. B. Glas oder Quarz, gelegt wird, das Ultraschall sehr gut reflektiert. Der von diesem Material reflektierte Ultraschall hat nach der Reflektion eine geringere Amplitude und ist phasenverschoben. Die Dämpfung und die Phasenverschiebung sind wiederum charakteristische Kennzeichen eines Materials.

Es ist ferner bekannt, dass das viskoelastische Verhalten von Materialien sich mit der Frequenz des Ultraschalls und auch mit der Temperatur der Probe ändert. Diese beiden genannten Einflussgrößen müssen bei der Interpretation der Daten mit berücksichtigt werden.

Die Echos des Ultraschalls können mit Wandlern oder optischen Messgeräten, wie zum Beispiel Interferometer erfasst werden.

Die aus der Messung gewonnenen Daten der mechanischen Moduli (Moduln) der Druckfarben- und Lackschichten können als absolute Messwerte, im Vergleich zu in einem Expertensystem oder einer Datenspeicher abgelegten Referenzwerte oder im Vergleich zu einer Probe mit definierten Aushärtungseigenschaften aus- und bewertet werden. Die Aushärtung bzw. die Trocknung der Druckfarben- und Lackschichten wird dabei bevorzugt in einer Kennzahl zusammengefasst, die es dem Maschinenbediener es erlaubt ohne große Interpretation von Kurvenverläufen steuernd einzugreifen, indem Maschinenparameter, wie Trocknertemperatur, Strahlungsleistung, Maschinengeschwindigkeit etc. an die Erfordernisse angepasst werden. Die Anpassung kann auch automatisiert erfolgen, wenn die Ergebnisse der Härtungs- und Trocknungsmessung direkt von der Maschinensteuerung übernommen und entsprechende Maßnahmen von dieser abgeleitet werden. Im einfachsten Fall erhält der Maschinenbediener Einstellungsvorschläge. Im komplexeren Fall werden direkt über Kennlinien, Berechnungsvorschriften oder anhand in einem Expertensystem abgelegten Wissens entsprechende Korrekturmaßnahmen eingeleitet. Dieses können einerseits im Falle einer ungenügenden Härtung bzw. Trocknung Maßnahmen sein, die die Trocknung verbessern. Bei ausreichender Trocknung kann die Steuerung auch zur Reduzierung der Trocknerleistung genutzt werden, um Energie zu sparen.

Der Ansatz, den Härtungsgrad bzw. Trocknungsgrad durch die Messung der mechanischen Kenngrößen zu bestimmen, erlaubt eine Härtungskontrolle, die auch in der rauen Druckereiumgebung einsetzbar ist. Sie kann dabei Offline außerhalb der Maschine oder Inline während des Maschinendurchlaufs erfolgen. Mit diesem Ansatz ist es auch erstmals möglich mit einem verträglichen Aufwand ein Produktionsprotokoll mit Statistiken, Kurvenverläufen oder Kennzahlen zu erhalten, die es dem Drucker ermöglicht, die ausreichende Trocknung bzw. Härtung und damit die Produktsicherheit gegenüber seinem Endkunden nachzuweisen.

## Patentansprüche

1. Verfahren zur Bestimmung des Härtungs- oder Trocknungsgrades einer oder mehrerer gedruckter Druckfarben- und/oder Lackschicht/en auf einem Substrat, zum Beispiel Papier, Karton, Kunststofffolie oder Verbundmaterialien, das im Verfahren des Tief-, Flexo- oder Offsetdruckes beschichtet wurden,
**gekennzeichnet dadurch,**
**dass** der Härtungsgrad bzw. Trocknungsgrad indirekt über die Veränderung der mechanischen und/oder viskoelastischen Eigenschaften der Druckfarben und/oder Lackschichten auf dem Substrat durch den Härtungs- bzw. Trocknungsvorgang bestimmt wird.

2. Verfahren nach Anspruch 1,
**gekennzeichnet dadurch,**
**dass** in der Druckfarben- und/oder Lackschicht eine Ultraschallschwingung bzw. ein Ultraschallsignal erzeugt wird, und dass das Echo der Ultraschallschwingung bzw. des Ultraschallsignals zur Bestimmung mechanischer und/oder viskoelastischer Eigenschaften der Druckfarben- und/oder Lackschicht ausgewertet wird.

3. Verfahren nach Anspruch 1 oder 2,
**gekennzeichnet dadurch,**
**dass** ein durch piezoelektrische oder magnetoresistive Wandler erzeugtes Ultraschallsignal durch mechanische oder Luftkoppelung in die Druckfarben und / oder Lackschicht eingebracht wird.

4. Verfahren nach Anspruch 1 oder 2,
**gekennzeichnet dadurch,**
**dass** das Ultraschallsignal durch einen Laserstrahl oder Laserpuls in der Druckfarben und / oder Lackschicht erzeugt wird, wobei durch die Wärmeenergie des Laserstrahles bzw. -pulses eine schnelle lokale thermische Expansion der Druckfarben- und/oder Lackschicht stattfindet, die zur Erzeugung von Ultraschall in der Druckfarben- und / oder Lackschicht führt.

5. Verfahren nach Anspruch 1 und 2,
**gekennzeichnet dadurch,**
**dass** der Ultraschall durch einen Laserstrahl oder Laserpuls in der Druckfarben und/oder Lackschicht erzeugt wird, indem durch die Wärmeenergie ein lokales schmelzen bzw. ablatieren der Druckfarben- und/oder Lackschicht stattfindet und dies zu einer Plasmaerzeugung führt, wobei durch den Momententransfer durch das Ablösen des Materials eine Ultraschallschwingung bzw. ein Ultraschallsignal in der Druckfarben- und/oder Lackschicht generiert wird.

6. Verfahren nach Anspruch 2 bis 5,
**gekennzeichnet dadurch,**
**dass** das in die Druckfarben- und/oder Lackschicht eingebrachte Ultraschallsignal bzw. der eingeleitete Laserimpuls oder das in der Druckfarben- und/oder Lackschicht erzeugte Ultraschallsignal frequenzmoduliert ist.

7. Verfahren nach Anspruch 2 bis 5,
**gekennzeichnet dadurch,**
**dass** das in die Druckfarben- und/oder Lackschicht eingebrachte Ultraschallsignal bzw. der eingeleitete Laserimpuls oder das in der Druckfarben- und/oder Lackschicht erzeugte Ultraschallsignal intensitäts- und frequenzmoduliert ist.

8. Verfahren nach Anspruch 4 bis 7,
**gekennzeichnet dadurch,**
**dass** die Wellenlänge des Lasers wählbar ist und auf die Absorptionscharakteristik der Druckfarben- und/oder Lackschicht abstimmbar ist.

9. Verfahren nach Anspruch 3 bis 8,
**gekennzeichnet dadurch,**
**dass** durch den Wandler oder die Laserquelle Impulse abgesendet werden,
die nur eine Frequenz bzw. Wellenlänge aufweisen.

10. Verfahren nach Anspruch 3 bis 8,
**gekennzeichnet dadurch,**
**dass** durch den Wandler oder die Laserquelle Impulse abgesendet werden, die kontinuierlich oder diskret ein Frequenz- bzw. Wellenlängenspektrum durchlaufen.

11. Verfahren nach Anspruch 2 bis 10,
**gekennzeichnet dadurch,**
**dass** die Echos der Schallwellen in transversaler und /oder longitudinaler Richtung durch geeignete Geber erfasst werden.

12. Verfahren nach Anspruch 11,
**gekennzeichnet dadurch,**
**dass** die Geber als Ultraschallwandler, vorzugsweise als Piezoelemente, ausgebildet sind.

13. Verfahren nach Anspruch 11,
**gekennzeichnet dadurch,**
**dass** die Geber als optische Messvorrichtungen zur Erfassung der Ausbreitung der Schallwellen in der Druckfarben- und/oder Lackschicht, vorzugsweise als Interferometer ausgebildet sind.

14. Verfahren nach einem oder mehreren der vorhergehenden Ansprüche,
**gekennzeichnet dadurch,**
**dass** an den erfassten Signalen eine Signalanalyse erfolgt, wobei zur Signalanalyse eine kommunikative Koppelung mit dem / den Gebern, der / die das Ultraschallsignal erfassen, erfolgt, und dass zur Signalanalyse von dem / den Gebern Messsignale empfangen werden und dass diese Messsignale hinsichtlich verschiedener Parameter auswertet werden.

15. Verfahren nach Anspruch 14,
**gekennzeichnet dadurch,**
**dass** die Signalanalyse derart erfolgt, das gemessene Signal mit einem Soll-Signal verglichen und bewertet wird.

16. Verfahren nach Anspruch 14 oder 15,
**gekennzeichnet dadurch,**
**dass** das Soll-Signal aus einem mathematischen Modell abgeleitet wird.

17. Verfahren nach Anspruch 14 oder 15,
**gekennzeichnet dadurch,**
**dass** das Soll-Signal dem Speicher eines Expertensystems entnommen wird.

18. Verfahren nach Anspruch 14 oder 15,
**gekennzeichnet dadurch,**
**dass** das erwartete Soll-Signal aus einer Referenzmessung gewonnen wird.

19. Verfahren nach Anspruch 14 bis 18,
**gekennzeichnet dadurch,**
**dass** mittels der Signalanalyse ein oder mehrere Kennwerte zur Kennzeichnung des physikalischen Zustandes der getrockneten Druckfarben- und/oder Lackschicht gebildet wird.

20. Verfahren nach Anspruch 19,
**gekennzeichnet dadurch,**
**dass** der/die mittels Signalanalyse gewonnene Kennwert/-e des Zustandes der getrockneten Druckfarben- und/oder Lackschicht vorzugsweise eine Prozentangabe des Härtungs- oder Trocknungsgrades ist.

21. Verfahren nach Anspruch 14 bis 20,
**gekennzeichnet dadurch,**
**dass** das Ergebnis der Signalanalyse, vorzugsweise des/der Kennwerte auf einer Anzeigevorrichtung dargestellt wird und dass die Darstellung vorzugsweise mit Handlungsempfehlungen für die Einstellung der Trocknereinrichtung und/oder von Maschinenparametern kombiniert wird.

22. Verfahren nach Anspruch 21,
**gekennzeichnet dadurch,**
**dass** die Ergebnisse am Leitstand einer Druckmaschine ausgegeben werden.

23. Verfahren nach Anspruch 14 bis 20,
**gekennzeichnet dadurch,**
**dass** aus dem Ergebnis der Signalanalyse automatisch Steuersignale für die Veränderung der Einstellung der die Trocknung bzw. Härtung beeinflussenden Prozessparameter, wie Trocknereinstellung, Produktionsgeschwindigkeit etc., gewonnen werden und dass diese an eine oder mehrere Steuereinrichtung weitergegeben werden, wobei die Signalweiterleitung direkt oder nach Bedienerfreigabe erfolgt, um eine Veränderung der Prozessparameter zu vollziehen.

24. Verfahren nach einem der vorhergehenden Ansprüche,
**gekennzeichnet dadurch,**
**dass** die Messung "Offline", außerhalb der Druckmaschine mit einem separater Messvorrichtung erfolgt.

25. Verfahren nach einem der vorhergehenden Ansprüche,
**gekennzeichnet dadurch,**
**dass** die Messung "Inline", während des Drucklaufs durch die Druckmaschine mittels einer Messeinrichtung erfolgt.

26. Verfahren nach einem der vorhergehenden Ansprüche,
**gekennzeichnet dadurch,**
**dass** die Messeinrichtungen per Datenleitung oder Datenfunk mit der Maschinensteuerung verbunden sind.

27. Verfahren nach einem der vorhergehenden Ansprüche,
**gekennzeichnet dadurch,**
**dass** Druckprodukte gemessen werden, die in Rollendruckmaschinen hergestellt werden.

28. Verfahren nach einem der vorhergehenden Ansprüche,
**gekennzeichnet dadurch,**
**dass** Druckprodukte gemessen werden, die in Bogendruckmaschinen hergestellt werden.

29. Verfahren nach einem der vorhergehenden Ansprüche,
**gekennzeichnet dadurch,**
**dass** die Bestimmung der Veränderung der mechanischen und / oder viskoelastischen Eigenschaften der Druckfarben und / oder Lackschichten auf dem Substrat an strahlenhärtenden Druckfarben und / oder Lackschichten erfolgt, die mit UV-Strahlung oder Elektronenstrahltrocknung gehärtet wurden.

30. Verfahren nach einem der vorhergehenden Ansprüche,
**gekennzeichnet dadurch,**
**dass** die Bestimmung der Veränderung der mechanischen und/oder viskoelastischen Eigenschaften der Druckfarben- und/oder Lackschichten auf dem Substrat an lösemittelhaltigen oder wasserhaltigen Druckfarben und/oder Lacken erfolgt.

31. Verfahren nach einem der vorhergehenden Ansprüche,
**gekennzeichnet dadurch,**
**dass** die Bestimmung der Veränderung der mechanischen und / oder viskoelastischen Eigenschaften der Druckfarben auf dem Substrat an Druckfarben erfolgt, die oxidativ und /oder in den Bedruckstoff wegschlagend trocknen.
